(19) **Europäisches Patentamt European Patent Office Office européen des brevets**

(11) **EP 4 556 613 A1**

(12) **EUROPEAN PATENT APPLICATION**
published in accordance with Art. 153(4) EPC

(43) Date of publication:
**21.05.2025 Bulletin 2025/21**

(21) Application number: **24843497.9**

(22) Date of filing: **17.07.2024**

(51) International Patent Classification (IPC):
**D06C 23/00** (2006.01)　　**D06C 27/00** (2006.01)

(52) Cooperative Patent Classification (CPC):
**D06C 23/00; D06C 27/00**

(86) International application number:
**PCT/KR2024/010260**

(87) International publication number:
**WO 2025/018782 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.07.2023　KR 20230093321
16.07.2024　KR 20240093881**

(71) Applicant: **CLO Virtual Fashion Inc.
Seoul 06236 (KR)**

(72) Inventors:
• **JU, Eun Jung
  Seoul 06236 (KR)**
• **LEE, Jae Hoon
  Seoul 06236 (KR)**
• **JEONG, Pil Joong
  Seoul 06236 (KR)**
• **KANG, Gyoo Cheol
  Seoul 06236 (KR)**

(74) Representative: **Gill Jennings & Every LLP
The Broadgate Tower
20 Primrose Street
London EC2A 2ES (GB)**

(54) **METHOD AND APPARATUS FOR GENERATING TEXTURE MAP**

(57)　Disclosed are a method and apparatus for generating a texture map, which may include: receiving input data related to a target fabric from a user; classifying the input data into mapping data for generating texture maps corresponding to information of the target fabric; generating at least one of a normal map or a diffuse map by inputting the mapping data into an artificial neural network (ANN) model; and generating a composite texture map corresponding to the target fabric based on the normal map or the diffuse map.

Start

Receive input data related to target fabric from user — 110

Classify input data into mapping data for generating texture maps corresponding to information of target fabric — 120

Generate at least one of normal map or diffuse map of target fabric by inputting mapping data into ANN model — 130

Generate texture map corresponding to target fabric based on normal map or diffuse map — 140

End

**FIG. 1**

**Description**

**TECHNICAL FIELD**

Embodiments relate to a method and apparatus for generating a texture map.

**BACKGROUND ART**

Natural simulation of a virtual garment in a three-dimensional (3D) virtual space may require a natural representation of a feature of fabric and a pattern on the fabric. To represent a pattern on fabric, simply synthesizing and simulating merely colors and shapes into the fabric may not suffice to achieve a natural representation of a material, such as the texture of the fabric on which the pattern is represented. Therefore, when representing a virtual garment in a 3D virtual space, it is desirable to generate a high-quality texture map for representing a unique material of fabric.

**DISCLOSURE OF THE INVENTION**

**TECHNICAL SOLUTIONS**

According to an embodiment, a texture map may be generated. Input data related to a target fabric is received from a user. The input data is classified into mapping data for generating texture maps corresponding to information of the target fabric. At least one of a normal map or a diffuse map is generated by feeding the mapping data into an artificial neural network (ANN) model. A composite texture map corresponding to the target fabric is generated based on the normal map or the diffuse map.

In one or more embodiments, receiving of the input data includes, in response to receiving text data input from the user, detecting information of the target fabric based on the text data.

In one or more embodiments, the receiving of the input data includes, in response to receiving image data input from the user, detecting information of the target fabric included in the image data.

In one or more embodiments, the classifying of the input data into the mapping data includes classifying the information of the target fabric into normal map information, diffuse map information, or other information. The normal map information may include information related to a fabric type and the diffuse map information may include information related to a fabric pattern representation.

In one or more embodiments, the ANN model includes a generative ANN model configured to generate the texture maps as a seamless map.

In one or more embodiments, the ANN model includes a machine learning model configured to generate a preset by learning a correlation between the fabric type and the normal map.

In one or more embodiments, the classifying of the input data into the mapping data includes, in response to the preset being matched to the input data, generating the mapping data based on the preset.

In one or more embodiments, the classifying of the input data into the mapping data includes, in response to the preset not being matched to the input data, outputting mapping data related to the target fabric based on the input data.

In one or more embodiments, the outputting of the mapping data related to the target fabric includes, in response to the mapping data and the preset not being matched to each other and the mapping data being normal map information, outputting a candidate group of presets similar to the normal map information.

In one or more embodiments, generating of the texture maps includes processing the normal map into a filter image and deforming the diffuse map using the filter image; and blending the deformed diffuse map and the filter image.

In one or more embodiments, the blending includes blending the filter image and the deformed diffuse map through image compositing.

In one or more embodiments, another map is generated by feeding the mapping information into the ANN model. The generating of the composite texture map may include generating a final composite texture map corresponding to the target fabric based on at least one of the normal map, the diffuse map, or the other map. The other map may be generated based on the normal map information and the other information.

In one or more embodiments, the composite texture map is simulated onto a three-dimensional (3D) virtual garment, and the 3D virtual garment applied with the composite texture map is displayed through a user interface (UI).

A feedback message is output to the user such that the user adjusts the input data in real time.

According to one or more embodiments, an electronic device configured to simulate a virtual garment includes one or more processors and memory. The memory stores instructions that cause the one or more processors to receive input data related to a target fabric from a user, classify the input data into mapping data for generating texture maps corresponding to information of the target fabric, generate at least one of a normal map or a diffuse map by feeding the mapping data into an ANN model, and generate a composite texture map corresponding to the target fabric based on the normal map or the diffuse map.

**BRIEF DESCRIPTION OF DRAWINGS**

These and other aspects, features, and advantages of the present disclosure will become apparent and more readily appreciated from the following description of embodiments, taken in conjunction with the accompanying drawings in which:

FIG. 1 is a flowchart illustrating a method of generating a texture map according to an embodiment;
FIG. 2 is a flowchart illustrating a method of generating a composite texture map according to an embodiment;
FIG. 3 is a diagram illustrating examples of a normal map, a diffuse map, and a composite texture map, according to an embodiment;
FIG. 4 is a diagram schematically illustrating an example operation for generating a composite texture map by an electronic device, according to an embodiment;
FIG. 5 is a diagram schematically illustrating an example operation for generating a composite texture map by an electronic device, according to an embodiment;
FIG. 6 is a diagram schematically illustrating a process of using an artificial neural network (ANN) model to obtain a normal map, according to an embodiment;
FIGS. 7 and 8A through 8D are diagrams schematically illustrating a user interface (UI), according to an embodiment; and
FIG. 9 is a block diagram illustrating an electronic device according to an embodiment.

**BEST MODE FOR CARRYING OUT THE INVENTION**

The following structural or functional descriptions of embodiments are merely intended for the purpose of describing the embodiments, and the embodiments may be implemented in various forms. The embodiments are not meant to be limited, but it is intended that various modifications, equivalents, and alternatives are also covered within the scope of the claims.

Although terms of "first" or "second" are used to explain various components, the components are not limited to the terms. These terms should be used only to distinguish one component from another component. For example, a "first" component may be referred to as a "second" component, or similarly, and the "second" component may be referred to as the "first" component within the scope of the right according to the concept of the present disclosure.

It will be understood that when a component is referred to as being "connected to" another component, the component can be directly connected or coupled to the other component, or intervening components may be present.

As used herein, the singular forms "a," "an," and "the" are intended to include the plural forms as well, unless the context clearly indicates otherwise. As used herein, the terms "include," "comprise," and "have" specify the presence of stated features, numbers, operations, elements, components, and/or combinations thereof, but do not preclude the presence or addition of one or more other features, numbers, operations, elements, components, and/or combinations thereof.

As used herein, "A or B," "at least one of A and B," "at least one of A or B," "A, B or C," "at least one of A, B and C," and "A, B, or C," each of which may include any one of the items listed together in the corresponding one of the phrases, or all possible combinations thereof.

Unless otherwise defined, all terms used herein including technical or scientific terms have the same meanings as those generally understood consistent with and after an understanding of the present disclosure. Terms, such as those defined in commonly used dictionaries, should be construed to have meanings matching with contextual meanings in the relevant art and the present disclosure, and are not to be construed as an ideal or excessively formal meaning unless otherwise defined herein.

Hereinafter, the embodiments will be described in detail with reference to the accompanying drawings. When describing the embodiments with reference to the accompanying drawings, like reference numerals refer to like components and a repeated description related thereto will be omitted.

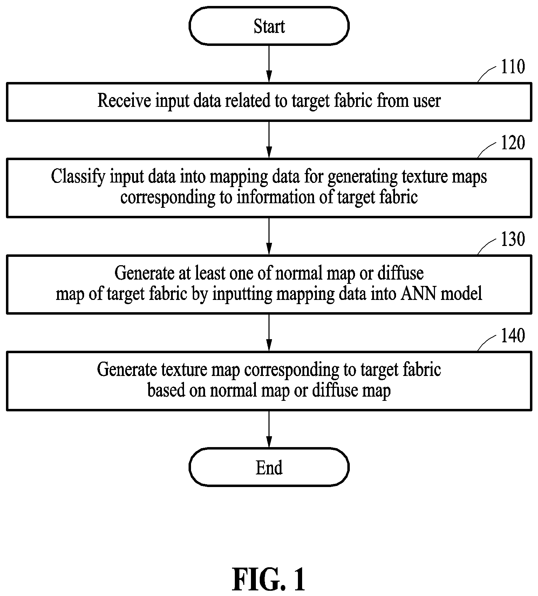

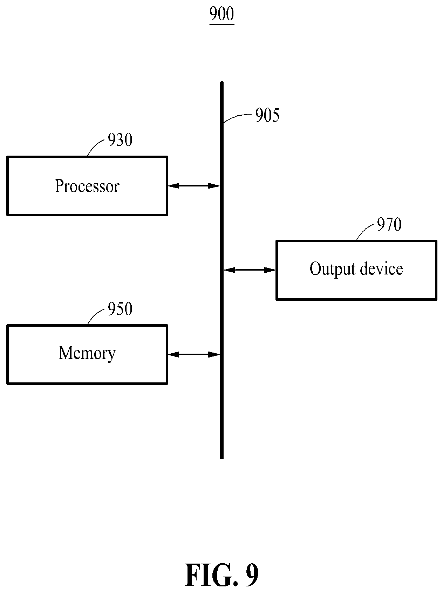

FIG. 1 is a flowchart illustrating a method of generating a texture map according to an embodiment. For ease of description, operations 110 through 140 are described as being performed using an electronic device 900 shown in FIG. 9. However, operations 110 through 140 may also be performed by any other suitable electronic device or within any suitable system. Further, while the operations described below with reference to FIG. 1 may be performed in sequential order and manner shown, the order of some operations may be changed, or some operations may be omitted without departing from the spirit and scope of the embodiments described herein. Most of the operations described below with reference to FIG. 1 may be performed in parallel or simultaneously.

According to an embodiment, to simulate a three-dimensional (3D) virtual garment, the electronic device 900 may represent both a type of fabric of the virtual garment and a pattern represented on the fabric. Accordingly, the electronic device 900 may generate texture maps similar to real ones for the fabric of the 3D virtual garment and apply the texture maps to the simulation.

The texture maps may refer to a set of images or data pieces used in 3D modeling and computer graphics to visually represent the fabric surface, colors, patterns, or the like. The texture maps may provide visual effects to the exterior of an object in 3D simulation. The texture maps may include various types, such as, for example, a diffuse map, a normal map, a displacement map, a specular map, a height map, a roughness map, an ambient occlusion map, or the like. Such various types of texture maps may be composited and used for realistic surface representations of the fabric surface.

A representation of fabric only with an image representing a pattern with color values of a resolution may merely simulate a virtual garment that is not close to a real one. In the embodiments described herein, a composite texture map may refer to a texture map that represents both a pattern and a material (quality) of a fabric. The composite texture map may be a high-quality texture map that simulates even the deformation in a pattern on a unique fabric material. The composite texture map may be generated to be identical to or be similar to a target fabric and provided to a user, and may be used to produce the fabric that is to be applied to a garment intended to be fabricated in the real world according to the user's intended design.

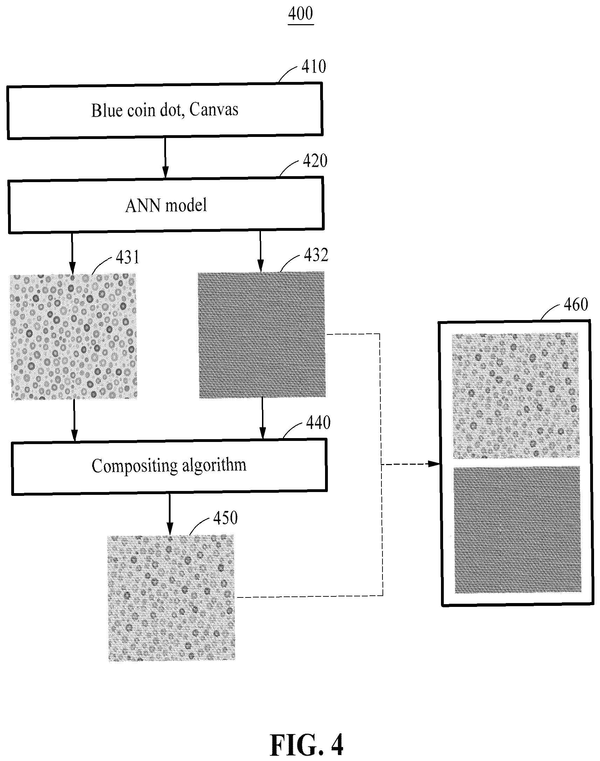

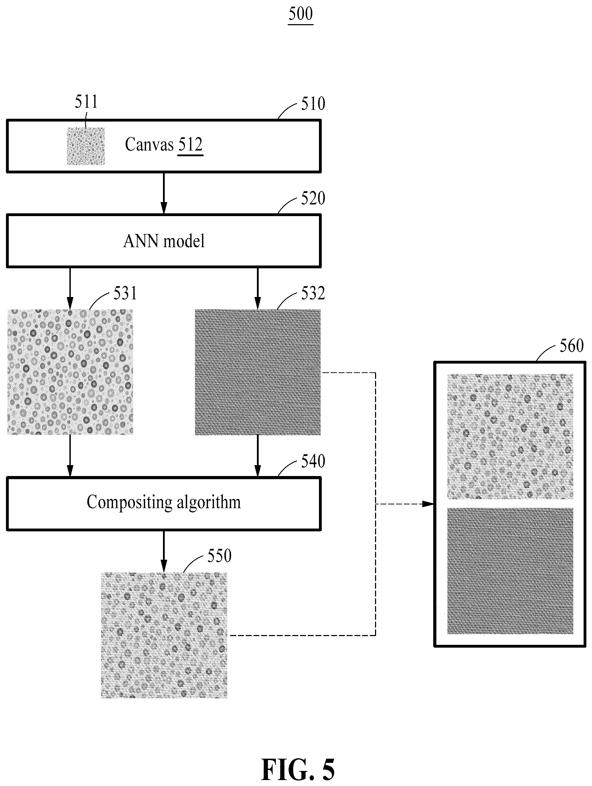

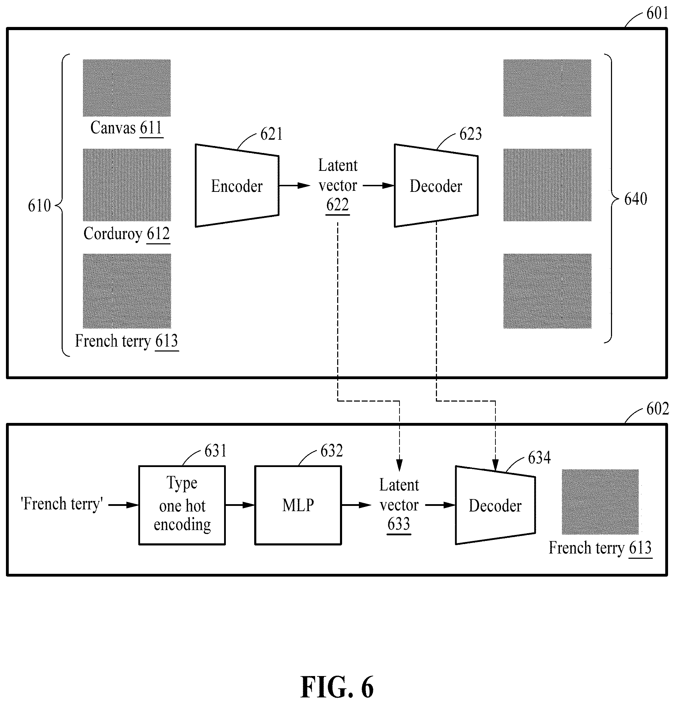

Hereinafter, how the electronic device 900 generates a texture map using an artificial neural network (ANN) model (e.g., an ANN model 420 in FIG. 4, an ANN model 520 in FIG. 5, or an ANN model 602 in FIG. 6) will be described. In operation 110, the electronic device 900 may receive input data related to a target fabric from a user.

A fabric described herein may refer to a flexible material formed by weaving, knitting, crocheting, or other methods using yarn or fibers. The fabric may be used for various purposes including, for example, garment production, home textiles (e.g., curtains and bedding), and industrial materials. A feature or characteristic of the fabric may be determined by a type of fibers used (e.g., cotton, wool, silk, and polyester), a production method (e.g., weaving and knitting), a processing method (e.g., dyeing, printing, and coating), or the like. The fabric may have different textures, weights, strengths, stretches, and transparencies, and may be selected according to a specific purpose of application. The target fabric described herein may refer to a fabric to be applied to a virtual garment created (or "generated" herein) by the user in a virtual space. The target fabric reflects visual or physical characteristics the user desires to produce using the electronic device 900. For example, when the user desires to generate a cotton-type fabric with a floral pattern, the target fabric may be a fabric with a "floral pattern on cotton."

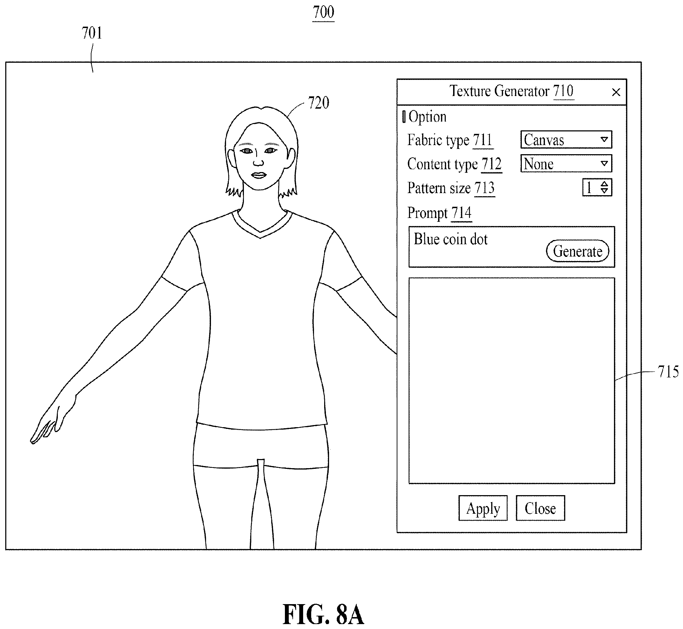

The electronic device 900 may provide a user interface (UI) (e.g., a UI 700 in FIGS. 8A through 8D) through which the user inputs the input data, or may provide a service through a server for the user to use the UI with a (user) terminal of the user.

The terminal, which may refer to a device capable of installing and executing applications associated with the server thereon, may provide an interface to the user. The interface may be provided by the terminal itself. For example, it may be provided by an operating system (OS) of the terminal or by an application installed on the terminal. The interface may also be provided by the server, and the terminal may simply receive and display the interface provided by the server.

The UI may include an input region provided for the user to input texts or upload images. Additionally, the UI may include touchscreen controls, sliding menus, or the like for the diversity and convenience of inputs made by the user. The electronic device 900 may process data in different ways depending on the type and format of the input data received through the UI.

In an embodiment, in response to receiving text data (or a message) from the user, the electronic device 900 may detect information of the target fabric based on the text data. The information of the target fabric described herein may refer to a type and details of data related to the fabric.

The information of the target fabric may include information about a fabric type, a fabric texture, a fabric pattern, a fabric color, a fabric thickness and weight, a fabric stretch, or the like. The electronic device 900 may detect and output the type, composition, or the like of the fabric.

The fabric type may include, for example, "Boucle," "Canvas," "Challis," "'Chambray/Oxford," "Chiffon," "'Clip jacquard," "Corduroy," "Crepe/CDC," "Crepe knit," "Crochet," "Denim," "Dewspo," "Dobby," "Dobby mesh," "Double knit/Interlock," "Double weave," "Eyelet," "Flannel," "Flatback rib," "Fleece," "French terry," "Gauze/Double gauze," "Georgette," "ITY/Matte jersey," "Jacquard/Brocade," "Jacquard knit," "Jersey," "'Lace," "Loop terry," "Low gauge knit," "Melton/Boiled," "Memory," "Mesh/Tulle," "Neoprene/Scuba," "Organza," "Ottoman," "PVC," "Pique," "Plaid," "Plain," "Pointelle," "Polar fleece," "Ponte," "Poplin," "Quilted knit," "Rib," "Ripstop," "Satin," "Seersucker," "Sherpa," "TRS," "Taffeta," "Tricot," "Tweed," "Twill," "Tyvek," "Vegan fur," "Vegan leather," "Vegan suede," "Velour," "Velvet," "Velvet/Velveteen," "Voile." "Waffle," or the like. However, the fabric types listed above are merely examples, and the type of the target fabric is not limited to the listed types.

The fabric pattern may include, for example, "Argyle," "Art Deco," "Batik," "'Baroque," "Brocade," "Camouflage," "Chevron," "Chintz," "Damask," "Ditsy Print," "Floral," "Fleur de Lis," "Gingham," "Greek Key," "Herringbone," "Houndstooth," "Ikat," "Jacquard," "Lattice," "Leopard Print," "Moroccan Tile," "Ogee," "Paisley," "Plaid (Tartan)," "Polka Dot," "Quatrefoil," "Seersucker," "Stripes," "'Toile de Jouy," "Zebra Print," or the like. However, the fabric patterns listed above are merely examples, and a pattern of the target fabric is not necessarily limited to the listed patterns. For example, when the user inputs a "Fleur De Lis" pattern and a "Challis" type through the UI, the electronic device 900 may detect "Fleur De Lis" as pattern information of the target fabric and "Challis" as type information of the target fabric from the text message. As another example, the user may input a text message into an input region without more details. When the user inputs a text message "lily flower patterned fabric of wool" into the input region, the electronic device 900 may detect "lily flower" as the pattern information of the target fabric and "wool" as the type information of the target fabric from the text message.

When detecting accurate information about the target fabric from a text message received from the user is not feasible, or when specifying the target fabric desired by the user, the electronic device 900 may guide the user to input additional text messages using an interactive chat-type UI.

In an embodiment, in response to receiving image data input from the user, the electronic device 900 may detect information of the target fabric included in the image data. For example, when the user inputs an image with a "Fleur De Lis" pattern, the electronic device 900 may extract a feature from the image corresponding to the pattern information of the target fabric.

The electronic device 900 may receive the image data and the text message simultaneously or sequentially. For example, the electronic device 900 may simultaneously receive an image with a "Fleur De Lis" pattern and a text data message or preset input of a "Challis" type. In this case, the electronic device 900 may detect the pattern information of the target fabric as the "Fleur De Lis" pattern and the type information of the target fabric as the "Challis" type. The preset input may refer to an input provided by the user to select data that is previously learned by the electronic device 900 and stored in a database (DB) and provided through the UI, by clicking or through sliding menus, for example. The preset input may be a user input in response to preset options available on the UI, such as, a fabric type option 711, a content type option 712, and a pattern size option 713 provided in a first texture generation interface 710 of FIGS. 8A through 8C.

In operation 120, the electronic device 900 may classify the input data into mapping data for generating texture maps corresponding to the information on the target fabric. The mapping data may refer to data that is obtained by analyzing the input data and classifying the analyzed input data to generate the texture maps corresponding to respective types based on the type of the input data.

In an embodiment, the electronic device 900 may classify the information of the target fabric into normal map information, diffuse map information, or other information. The normal map information may include information related to a fabric type, and the diffuse map information may include information related to a fabric pattern representation.

In an embodiment, the ANN model may include a machine learning model that learns a correlation between a fabric type and a normal map to generate a preset.

In an embodiment, in response to the preset matching the input data, the electronic device 900 may generate the mapping data based on the preset.

In an embodiment, in response to the preset matching the input data, the electronic device 900 may output the mapping data related to the target fabric based on the input data.

In an embodiment, the UI may provide a list of presets previously learned and stored in the DB in the form of a sliding menu to allow the user to input a preset. When the user inputs nominal map-related information through the interactive chat-type UI, and the mapping data and the preset do not match, the electronic device 900 may provide candidate nominal maps related to the mapping data in the preset.

In an embodiment, when the mapping data and the preset do not match, and the mapping data is the normal map information, the electronic device 900 may output candidate presets similar to the normal map information. When the ANN generates and outputs the diffuse map and the normal map, whether to use a generative ANN model or a machine learning model trained with presets may vary depending on the user's settings or texture map generation environment.

The normal map may be a texture map that represents the detailed texture and curves of a fabric surface according to a fabric type. Thus, the normal map information related to a fabric type may correspond to the type information of the target fabric detected from the input data provided by the user.

The diffuse map may be a texture map that defines a fabric surface color or pattern. Thus, the diffuse map information related to a fabric pattern representation may correspond to the pattern information of the target fabric detected from the input data provided by the user. The pattern information of the target fabric may also include color information, in addition to a pattern (or design) on the target fabric.

Another map, or the other map described herein, may include other maps besides the normal map and the diffuse map, such as a displacement map, a specular map, a height map, a roughness map, and an ambient occlusion map.

The displacement map is a texture map that reflects the geometric characteristics of a fabric surface to represent an actual physical depth and details of the fabric. By applying the displacement map to a 3D virtual garment, the electronic device 900 may simulate a realistic depth of the fabric and display a more realistic fabric through a UI.

The specular map is a texture map indicating the degree of light reflection on a fabric surface to represent the reflectivity and glossiness of the fabric surface. By applying the specular map to a 3D virtual garment, the electronic device 900 may render a certain portion of the fabric applied to the 3D virtual garment to appear shiny or matte, and may simulate different textures of the fabric and display a more realistic fabric through a UI.

The height map is a texture map that represents the degree of elevations at different locations of a fabric surface in the form of a grayscale image. By applying the height map to a 3D virtual garment, the electronic device 900 may simulate the elevations of different locations of the fabric surface and display a more realistic fabric through a UI.

The roughness map is a texture map that represents the degree of roughness of a fabric surface. By applying the roughness map to a 3D virtual garment, the electronic device 900 may simulate changes in the roughness of the fabric surface and display a more realistic fabric through a UI.

The ambient occlusion map is a texture map that represents shadows in occluded areas of the surrounding environment where light does not reach. By applying the ambient occlusion map to a 3D virtual garment, the electronic device 900 may simulate soft shadows in gaps, edges, small holes, and the like of a 3D virtual garment to provide a sense of depth and realism through a UI.

The texture maps, other than the normal map and the diffuse map, are not limited to those described above, but may include any types of texture maps (e.g., an opacity map).

In an embodiment, the electronic device 900 may receive the input data related to the target fabric, analyze it, and generate the other map.

In an embodiment, the electronic device 900 analyzes the input data and classifies the mapping data corresponding to information of the target fabric. Excluding the normal map information and the diffuse map information in the mapping data, remaining information may be classified as other information. The other information may include information about physical properties or composition associated with the target fabric, such as, a fabric thickness and weight, fabric roughness, fabric stretch, or the like.

In an embodiment, the electronic device 900 may feed the mapping data into the ANN model to generate the normal map. The electronic device 900 may generate the normal map based on the normal map information or the other information. In an embodiment, the electronic device 900 may feed the mapping data into the ANN model to generate the other map. The electronic device 900 may generate the other map based on the normal map information or the other information.

In an embodiment, the other information may be provided to the ANN model to generate the other map, such as, the displacement map, the specular map, the height map, the roughness map, the ambient occlusion map, and the like. For example, when the other information is related to the degree of roughness (e.g., smoothness), the ANN model may generate the roughness map that represents the smoothness of a fabric surface.

In operation 130, the electronic device 900 may generate at least one of the normal map or the diffuse map of the target fabric by feeding the mapping data into the ANN model. The ANN model may include at least one of a generative adversarial network (GAN) or a machine learning model.

In an embodiment, the ANN model includes the GAN that generates a texture map as a seamless map. The seamless map is a texture map where boundaries are connected without visible seams when a corresponding patten is repeated. The seamless map may be designed such that a texture repeats infinitely in any direction in the texture map. The generative ANN model may generate the normal map, the diffuse map, and other maps, as a seamless map. For example, when the user indicates a "Fleur De Lis" pattern in a text message, the electronic device 900 may allow the ANN model to generate a diffuse map for the "Fleur De Lis" pattern as a seamless map. As another example, when the user indicates a non-seamless image with a "Fleur De Lis" pattern, the electronic device 900 may generate a diffuse map for the "Fleur De Lis" pattern as a seamless map through the ANN model. The same applies to the normal map and other maps, and the ANN model may thus generate these maps respectively as a seamless map based on an input.

The normal may be generated from the fabric type information when the ANN model learns correlations between the normal maps and fabric types. A preset described herein refers to data that pairs a fabric with various information that define the fabric. The various information may include, the type, pattern, texture, and thickness of the fabric, as described above. The ANN model that has learned correlations between presets and characteristics (or features) of real fabrics may compare an input from the user to the mapping data to output the normal map.

When the mapping data corresponds to a preset learned by the ANN model, the ANN model may output a texture map based on a corresponding learned correlation. For example, when the ANN model previously learned a "Fleur De Lis" pattern and a "Challis" type and stored it as a preset, and the user inputs the "Fleur De Lis" pattern + "Challis" type through the UI, the ANN model may search for the preset corresponding to the "Fleur De Lis" pattern and the "Challis" type and output a diffuse map and a normal map that are identical or similar to the preset. Further, since the ANN model includes the generative ANN model, it may also generate a new diffuse map for the "Fleur De Lis" pattern.

On the other hand, when the mapping data does not correspond to a preset learned by the ANN model or does not exist, the ANN model may analyze the mapping data and generate suitable texture maps. For example, when the user indicates a "curved fabric with a blue dot pattern" in the input region, the electronic device 900 may detect the "blue dot pattern" as the mapping data related to the pattern of the target fabric, and "curved" as the mapping data related to the type of the target fabric. In this case, the ANN model may receive the detected mapping data as an input. The ANN model may include the generative ANN model, and may generate a new diffuse map for the "blue dot pattern" or may generate a new diffuse map based on a previously learned "blue coin dot" in a preset.

In an embodiment, the electronic device 900 may generate a normal map that directly reflects "curves" provided by the user. For example, the electronic device 900 may select the normal map representing "curves" from various example normal maps generated and provided by the ANN model, which may be results of direct generation without relying on an existing preset. When the electronic device 900 selects the normal map representing "curves," it may request the user for additional information by providing the various example normal maps generated by the ANN model to the UI, or may request the user for additional information required to select the normal map through the UI to generate a final normal map.

According to an embodiment, the ANN model may learn correlations between a normal map and user inputs describing fabric characteristics, such as, "curved," "rough," and "smooth." For example, the ANN model learns a correlation that allows it to generate a "corduroy" normal map based on an input describing a fabric characteristic of "curved."

Additionally, the ANN may learn correlations between a fabric type and inputs describing fabric characteristics, such as, "curved," "rough," and "smooth," and generate a normal map corresponding to a fabric characteristic based on a fabric type detected from the learning. For example, the ANN model may learn a correlation that allows it to detect a fabric type of "corduroy" based on an input describing such a fabric characteristic, and may then generate a normal map corresponding to "corduroy" based on the detected fabric type.

In general, the diffuse map may be implemented in the real world by generating a virtual pattern that does not exist in the real world based on a user input. In contrast, for the normal map, the user may use an interactive chat-type UI, which may allow the user to provide characteristics or features of a fabric type through chats rather than inputting the name of the fabric type, without presets provided by the UI, to generate the target fabric.

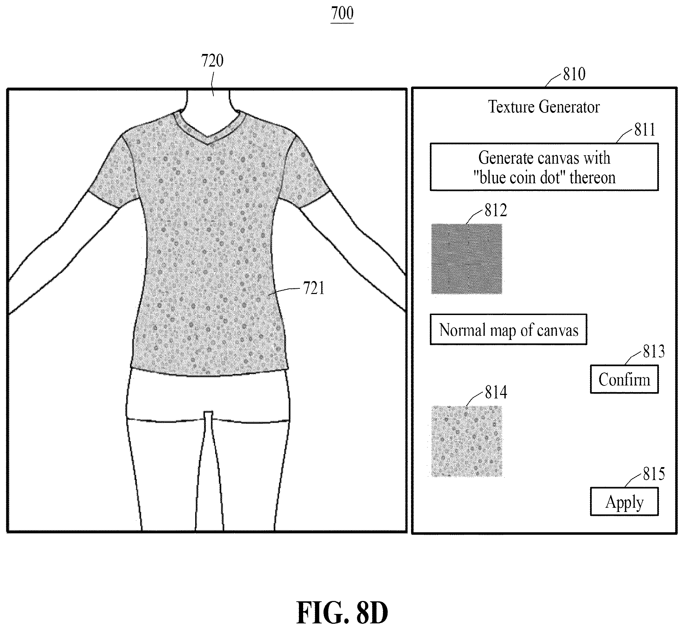

Referring to FIG. 8D, even when the user does not provide an input related to a type of the target fabric that matches a name of a previously learned preset, the ANN model may compare such a user input to the preset and output a candidate group of presets that are similar to the user input, and the electronic device 900 may provide the candidate group of presets onto the UI to guide the user in selecting a nominal map.

The electronic device 900 may display the generated diffuse map and normal map as an intermediate result through the UI. In this case, when the user provides, via the UI, an input indicating that the intermediate result is not an intended result, the electronic device 900 may generate a different intermediate result through the ANN model. Additionally, the electronic device 900 may request additional information about the input data in the form of a chat with the user through the UI to generate a texture map that meets the intention of the user. However, the UI of the electronic device 900 is not limited to such an interactive chat format and may include any schemes to display multiple intermediate results and request an input by a user's selection, such as, providing a sliding menu or clicking a candidate group.

In operation 140, the electronic device 900 may generate a composite texture map corresponding to the target fabric based on the normal map or the diffuse map. The composite texture map may include a texture map generated by compositing texture maps (e.g., the normal map, the diffuse map, or other maps).

In an embodiment, the electronic device 900 may generate a final composite texture map corresponding to the target fabric based on at least one of the normal map, the diffuse map, or other maps.

In an embodiment, the electronic device 900 may generate an ND composite texture map based on a normal map N and a diffuse map D and additionally apply another map to the ND composite texture map to generate the final composite texture map. In this case, the electronic device 900 may composite the normal map N and the diffuse map D according to a user input to generate the ND composite texture map, and may then apply the other map, such as, a specular map or a roughness map, to generate the final composite texture map with additional properties, such as, the glossiness or roughness of the surface. This may allow the user to add properties or characteristics on top of a basic texture, color, and pattern of the target fabric they desire to generate.

In an embodiment, the electronic device 900 may generate an NE composite texture map based on a normal map N and another map E and additionally apply a diffuse map to the NE composite texture map to generate the final composite texture map. For example, the electronic device 900 may composite the generated normal map and a roughness map to generate the NE composite texture map that reflects a basic texture, and may then additionally apply the diffuse map based on a user input to generate the final texture map with the same texture but with different colors and patterns and provide it to the UI. This may allow the user to add various color and pattern representations on top of the same texture and physical properties of the target fabric they desire to generate.

In an embodiment, the electronic device 900 may simultaneously combine, blend or merge the generated normal map, diffuse map, and/or other map to generate the final composite texture map. Alternatively, the electronic device 900 may simultaneously feed the normal map information, the diffuse map information, and the other map information included in the data input from the user into the ANN model to generate the final composite texture map that combines the respective information. This may allow the user to obtain the final composite texture map that combines the texture of the normal map, the color and pattern of the diffuse map, and any additional properties or characteristics of the other map for the target fabric to be generated.

The embodiments described above may be provided as an example of generating a final composite texture map, and the method and order of generating the final composite texture are not limited to the described embodiments. The electronic device 900 may generate the final composite texture map by applying a normal map, a diffuse map, and another map in various combinations and sequences depending on user needs and input data.

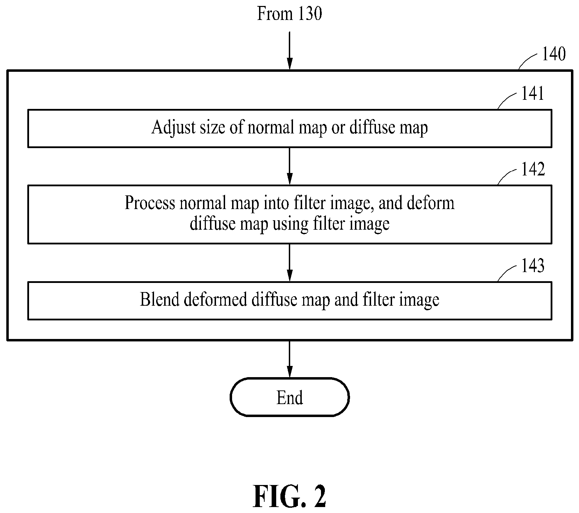

FIG. 2 is a flowchart illustrating operation 140 of generating a composite texture map according to an embodiment. The electronic device 900 may perform operations 141 to 143 in operation 140 to generate a composite texture map corresponding to a target fabric.

In operation 141, the electronic device 900 may adjust the size of a normal map and a diffuse map. For example, under the assumption that the sizes of the diffuse map and the normal to be used are 512×512 and 1822×602, respectively, the electronic device 900 may adjust the sizes of the diffuse map and the normal map to 3584×512 and 3644×602, respectively, such that the two maps have similar sizes, to composite the normal map and the diffuse map. However, this resizing of the maps at an integer ratio of the horizontal and vertical dimensions is provided for ease of description, and the sizes of the normal map and the diffuse map may be adjusted to be similar or equal.

In operation 142, the electronic device 900 may process the normal map into a filter image and may deform the diffuse map using the filter image. For example, the electronic device 900 may change the normal map to a 1-channel grayscale image such that a fabric pattern represented on the normal map stands out. Additionally, it may adjust a gamma value of the image in the normal map to emphasize the pattern, such as, curves in a fabric.

The 1-channel grayscale image may refer to a single-channel representation of color information of an image. This image may include only brightness information, rather than color intensity, and a pixel value may generally be in a range between 0 (black) and 255 (white). Each pixel value may represent the brightness of each pixel, and intermediate values may represent different shades of gray.

The 1-channel grayscale image may be used when color information is not required, or to reduce complexity in texture analysis, pattern recognition, and image processing. It may also save storage space and processing time, which may, in turn, increase the efficiency of data processing. Because information such as fabric curves represented on the normal map is used, the electronic device 900 may convert the normal map into the 1-channel grayscale image. However, such a 1-channel grayscale method is provided merely as an example of the methods by which the electronic device 900 represents the normal map to emphasize the curves, and other methods may also be used to emphasize the curves.

In an embodiment, the electronic device 900 may deform the diffuse map using the filter image to apply, to the diffuse map, a representation such as fabric curves on the normal map. For example, when the size of the normal map and the size of the diffuse map have a width of *x* and a height of *y*; a 3D red, green, blue (RGB) color value of each pixel (where, the RGB color value is in a range of 0 to 255) is "*input*[*u*][*v*]" (where, a range of "*u*" is zero (0) or greater and less than x, and a range of "*v*" is 0 or greater and less than y); and a 1-channel grayscale color value of the filter image (where, the grayscale color value is in a range of 0 to 255) is "*filter*[*u*][*v*]," a 3D RGB color value of each pixel that forms the deformed diffuse map, which is a resulting image generated by applying the filter image to the diffuse map, may be "*output*[*u`*][*v`*]," and an equation used to find a value of *output*[*u`*][*v`*] may be expressed as Equation 1 below.

[Equation 1]

$$output[u`][v`]$$

$$= input[u + \lfloor(filter[u][v] - 128) * \alpha/256\rfloor][v + \lfloor(filter[u][v]$$

$$- 128) * \beta/256\rfloor]$$

In Equation 1, $\lfloor n \rfloor$ denotes an integer part of *n*, and $\alpha$ and $\beta$ denote the strengths of a distortion, with a larger value indicating a greater distortion in the diffuse map. $\alpha$ denotes the strength of a distortion in a horizontal direction of an image, and $\beta$ denotes the strength of a distortion in a vertical direction of the image. Each factor may have an unlimited range, and negative (minus, -) values may indicate curves in the opposite direction. In this case, the electronic device 900 may fix a specific value and use the fixed value, but may change the value as needed.

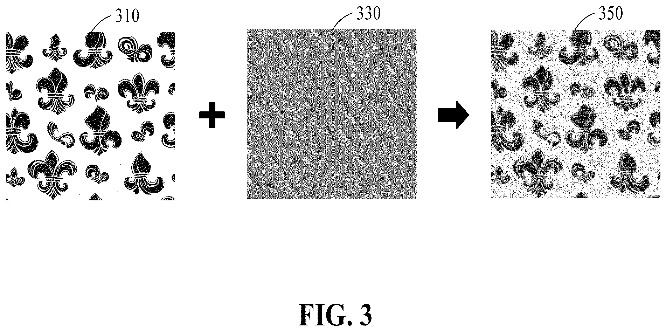

In operation 143, the electronic device 900 may blend the deformed diffuse map and the filter image. Referring to FIGS. 3 through 5, the electronic device 900 may blend the deformed diffuse map and the filter image to generate a composite texture map, which is a final result intended by the user. The electronic device 900 may blend the deformed diffuse map and the filter image through image compositing to generate the composite texture map.

Image compositing, or an image compositing mode, may refer to a process of combining multiple images or elements in image editing software to generate a new image. Through image compositing, the electronic device 900 may properly arrange each element and combine different elements using a blending mode, to achieve a desired visual effect. In this image compositing mode, the electronic device 900 may mainly perform operations such as image combination, layer adjustment, masking, and hue and lighting adjustment. Image combination is an operation of combining multiple images to generate a single new image. Image combination may synthesize a person or object onto a background image or generate a scene in which multiple images (or photos) are combined. Layer adjustment is an operation of stacking individual images or elements into layers and then adjusting the transparency or blending mode of each layer to achieve a desired effect. This may naturally combine image elements or emphasize a certain part of an image. Masking is an operation using a mask to hide or expose a portion of an image to show only a desired portion of the image. This may involve manipulating a portion of an image or emphasizing a certain area. Hue and lighting adjustment is an operation of adjusting the hue or contrast of an image or adding lighting effects to enhance the overall visual effect. For example, using a soft light method among such various methods of image compositing, the electronic device 900 may blend the filter image and the deformed diffuse map.

The soft light method refers to a method of compositing two images based on one of the images. Using a color value of the image, the soft light method may strengthen or weaken the contrast of the other image. The soft light method may be used to combine two images to generate a new image. Blending by the soft light method may be used to simulate a lighting effect and add soft lighting to an image. The soft light method may be determined by basically two factors-the brightness of a blending target and the brightness of a blending color. The soft light method may process bright and dark areas differently. In a bright area, the color of a layer that is a target of the soft light method may be adjusted to a brighter tone, and in a dark area, it may be adjusted to a darker tone. An image blended by the soft light method may produce the soft lighting effect.

The soft light method may be used to adjust the color, contrast, and lighting of images. Image blending by the soft light method may be used to produce various effects, for example, brightening a poorly lit image (or photo), adding soft shadows to an image, or the like. That is, the electronic device 900 may employ the soft light method to clarify a relationship between pixels in the deformed diffuse map, based on the filter image. In a case where it is determined that the brightness of the deformed diffuse map is insufficient, and the fabric texture or curves on the normal map are not fully represented, the electronic device 900 may apply the soft light method repeatedly. However, the image compositing method is not limited to the soft light method described above, and any image compositing method (e.g., normal, overlay and hard light) that one of ordinary skill in the art may conceive may also be used.

In an embodiment, the electronic device 900 may generate another map by feeding other information related to the target fabric included in the input data into the ANN model. The electronic device 900 may update the composite texture map by compositing the other map into the composite texture map. For example, in a case where the other information is information related to a stretch of the target fabric, the ANN model may generate the other map that is a texture map related to the stretch. However, the other map related to the stretch may not be readily represented two-dimensionally on the UI. However, when the user applies, to a 3D virtual garment, the composite texture map applied with the other map, data related to the stretch may be displayed on a simulation result, or the simulation may be performed with the stretch applied using a physical force when the 3D virtual garment is simulated.

FIG. 3 is a diagram illustrating examples of a normal map, a diffuse map, and a composite texture map, according to an embodiment. Referring to FIG. 3, the electronic device 900 may composite a diffuse map 310 and a normal map 330 to generate a composite texture map 350. The diffuse map 310 may be an example diffuse map generated by the electronic device 900 with an input of "Fleur De Lis" received as a text or image. The normal map 330 may be an example normal map generated by the electronic device 900 with an input of "Quilted knit (88% polyester, 9% viscose rayon, 3% spandex/-elastane)" received as a text or image. The electronic device 900 may composite the diffuse map 310 and the normal map 330 to generate the composite texture map 350 with a "Fleur De Lis" pattern on a "Quilted knit" material. The electronic device 900 may display the generated composite texture map 350 through a UI.

FIG. 4 is a diagram schematically illustrating an example operation in which an electronic device generates a composite texture map according to an embodiment. Referring to FIG. 4, the electronic device 900 may receive an input related to a target fabric. The user may provide a normal map and a diffuse map in a different manner depending on the form of a UI. For example, in a case where the UI is a texture generator interface (e.g., a first texture generator interface 710 in FIG. 8A) through which information related to the normal map is input through a preset-based input region and information related to the diffuse map is input through an input region in the form of a prompt, the user may select "Canvas" from presets and input "Blue coin dot" through the prompt. In another example, in a case where the UI is a UI (e.g., a second texture generator interface 810 in FIG. 8D) having an interactive chat-type input region through which the user inputs both the normal map and the diffuse map into the prompt, a user input may be "Blue coin dot on Canvas."

The electronic device 900 may detect mapping data by classifying the received input (e.g., 410). For example, the electronic device 900 may detect "Canvas" as information related to a type of the target fabric because the preset is "Canvas" and detect "Blue coin dot" as information related to a pattern of the target fabric from the user input "Blue coin dot" into the input region. In another example, the electronic device 900 may detect, from the user input "Blue coin dot on Canvas," "Canvas" as the information related to the type of the target fabric and "Blue coin dot" as the information related to the pattern of the target fabric. Accordingly, the electronic device 900 may classify "Blue coin dot" as diffuse map-related information and "Canvas" as normal map-related information. Accordingly, the electronic device 900 may classify "Blue coin dot, Canvas" as mapping data 410.

The electronic device 900 may feed the mapping data 410, which is the diffuse map-related information and the normal map-related information obtained by the classifying, into an ANN model 420. For example, the ANN model 420 may use a generative ANN model and a machine learning model to generate a "Blue coin dot" diffuse map 431 from the diffuse map-related information and a "Canvas" normal map 432 from the normal map-related information. In this case, the ANN model 420 may generate the "Blue coin dot" diffuse map 431 and the "Canvas" normal map 432 as seamless maps, such that the pattern or shape of the type is continuous when the respective maps are stitched together or expanded.

The electronic device 900 may generate a composite texture map using a compositing algorithm 440 for the diffuse map 431 and the normal map 432 generated by the ANN model 420. For example, the ANN model 420 may use the "Blue coin dot" diffuse map 431 and the "Canvas" normal map 432 to generate a "Blue coin dot on Canvas" texture map 450 using the compositing algorithm 440. The compositing algorithm 440 may refer to an algorithm that uses the method described above with reference to FIG. 2. The electronic device 900 may display the "Blue coin dot on Canvas" texture map 450 and the "Canvas normal map 432" generated in response to the user input together on a result window 460 of the UI.

FIG. 5 is a diagram schematically illustrating an example operation in which an electronic device generates a composite texture map according to an embodiment. Referring to FIG. 5, the electronic device 900 may receive an input related to a target fabric. For example, when the user uploads a target image 511 related to a pattern of the target fabric desired by the user to use and indicates "Canvas" 512 as a type of the target fabric, the electronic device 900 may receive the target image 511 and the "Canvas" 512 as the input related to the target fabric. In this case, the "Canvas" 512, which is normal map-related information, may be selected by the user from presets provided through a UI or may be normal map-related mapping data detected based on information input by the user into an input region.

The electronic device 900 may classify the received input into mapping data. For example, the electronic device 900 detects information related to a pattern of the target fabric from the target image 511 received from the user. In this case, the electronic device 900 may extract features of the target image 511 to detect a "Blue coin dot" pattern. The "Canvas" 512 may be information related to a type of the target fabric. Thus, the electronic device 900 may classify the target image 511 as diffuse map-related information and the "Canvas" 512 as normal map-related information.

The electronic device 900 may feed mapping data 510, which is the classified diffuse map-related information and the classified normal map-related information, into an ANN model 520. For example, the ANN model 520 generates a "Blue coin dot" diffuse map 531 from the diffuse map-related information and a "Canvas" normal map 532 from the normal map-related information, using a generative ANN model and a machine learning model. In this case, the ANN model 520 may generate the "Blue coin dot" diffuse map 531 and the "Canvas" normal map 532 as seamless maps, such that the pattern or shape of the type is continuous when the respective maps are stitched together or expanded. In this case, since the ANN model 520 has received the target image 511 as an input from the user, the ANN model 520 may generate it as a seamless map without generating it separately.

When generating the seamless map, the electronic device 900 may use inpainting. Inpainting refers to a technique that naturally restores and stitches together missing or damaged areas when processing an image. Inpainting may fill in a missing area based on data on the surroundings of the missing area to make the image appear complete. To generate a seamless map, this inpainting technique may be used to adjust edges of a texture to be well connected to a center, such that there are no seams when an image is repeated. That is, the same pattern may be repeated without any seams, even if a texture map is extended infinitely.

The electronic device 900 may generate a composite texture map using a compositing algorithm 540 for the diffuse map and normal map generated by the ANN model 520. For example, the ANN model 520 generates a "Blue coin dot on Canvas" texture map 550 from the "Blue coin dot" diffuse map 531 and the "Canvas" normal map 532 through the compositing algorithm 540. The compositing algorithm 540 may be an algorithm using the method described above with reference to FIG. 2.

The electronic device 900 may display the "Blue coin dot on Canvas" texture map 550 and the "Canvas" normal map 532 generated in response to the user input together on a result window 560 of the UI.

FIG. 6 is a diagram schematically illustrating a process of obtaining a normal map using an ANN model, according to an embodiment. According to an embodiment, the electronic device 900 may include an ANN model 602 configured to generate a normal map. The ANN model 602 may be trained from a machine learning device 601 to generate the normal map based on training data 610. The machine learning device 601 may include a first encoder 621 configured to output a first latent vector 622 from the training data 610 (e.g., presets described above), and a first decoder 623 configured to output a training result 640 from the first latent vector 622. For example, referring to FIG. 6, the machine learning device 601 may receive the training data 610 including data in which names of a plurality of fabric types (e.g., Canvas 611, Corduroy 612, and French terry 613) are paired (or labeled) with normal maps of the fabric types.

The machine learning device 601 may extract the first latent vector 622 from the received training data 610. The first latent vector 622 refers to a vector that represents features of data. The first latent vector 622 may compress or summarize the features of the original data and may provide a simple representation of a complex data structure. Thus, the first encoder 621 may extract important information from the data such as an image.. In this way, the first decoder 623 of the machine learning device 601 may extract the first latent vector 622 to learn the features of the data.

The machine learning device 601 may extract the training result 640 from the first latent vector 622 using the first decoder 623. The first decoder 623 may be trained (or updated) to a second decoder 634 to output a normal map suitable for a user input related to a fabric type, based on the first latent vector 622, the training result 640, and the training data 610. In this process, the first latent vector 622 may also be learned (or updated) into a second latent vector 633 to include more suitable image features.

The ANN model 602 may be modeled including the second decoder 634 and the second latent vector 633 learned by the machine learning device 601. The ANN model 602 may include a second encoder 631 configured to perform "type one-hot encoding," a multilayer perceptron (MLP) 632 configured to output the second latent vector 633, and the second decoder 634 configured to output a normal map corresponding to a user input from the second latent vector 633.

Type one-hot encoding may be a data preprocessing technique used to input categorical data into a machine learning model. For example, when categories representing fabric types are [Canvas 611, Corduroy 612, French Terry 613] as shown in the training data 610, the categorical data may be quantified by encoding "Canvas" 611 as [1, 0, 0], "Corduroy" 612 as [0, 1, 0], and "French Terry" 613 as [0, 0, 1]. In this case, when the user inputs "French Terry" as an input, the encoder 631 may encode this user input as [0, 0, 1] using the type one-hot encoding technique.

The MLP 632 may receive the encoded user input and extract the latent vector 633. For example, it may receive the encoded user input [0, 0, 1] and extract the latent vector 633 for "French Terry" 613.

The decoder 634 may then output a normal map of "French Terry" 613, which is a training result, using the latent vector 633 for "French Terry" 613. As a result, the electronic device 900 may display the normal map of "French Terry" 613 generated by the ANN model 602 on a UI.

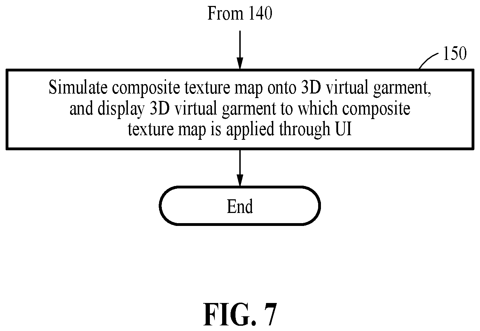

FIG. 7 is a flowchart of operation 150 where a composite texture map is simulated onto a 3D virtual garment for display, according to one embodiment. FIGS. 8A through 8B are diagrams schematically illustrating a UI according to an embodiment. Referring to FIG. 7, in operation 150, the electronic device 900 may simulate a composite texture map onto a 3D virtual garment and display the 3D virtual garment to which the composite texture map is applied through a UI (e.g., a UI 700).

According to an embodiment, the UI 700 may include a simulation region 701 that is a display region for an avatar 720 and a virtual garment, and a texture generator interface (e.g., the first texture generator interface 710 or the second texture generator interface 810). A user may instruct the electronic device 900 to simulate a fabric through the texture generator interface 710.

Referring to FIGS. 8A through 8C, the first texture generator interface 710 may include a fabric type option 711, a content type option 712, a pattern size option 713, a prompt 714, and a composite texture map region 715 that displays a composite texture map.

The fabric type option 711 may provide options for normal map presets previously learned by the electronic device 900, from which the user may select a desired fabric type. Accordingly, the electronic device 900 may generate a normal map based on a correlation between a previously learned preset and the normal map.

An option selected from the content type option 712 may be related to other information to be added to a composite texture map, excluding diffuse map-related information and normal map-related information. An option selected from the pattern size option 713 may refer to the size of a pattern to be represented on the composite texture map.

The prompt 714 may be a region into which the user may provide information related to a fabric pattern. Although inputting a text has been described as an example for ease of description, the user may also input an image as described above.

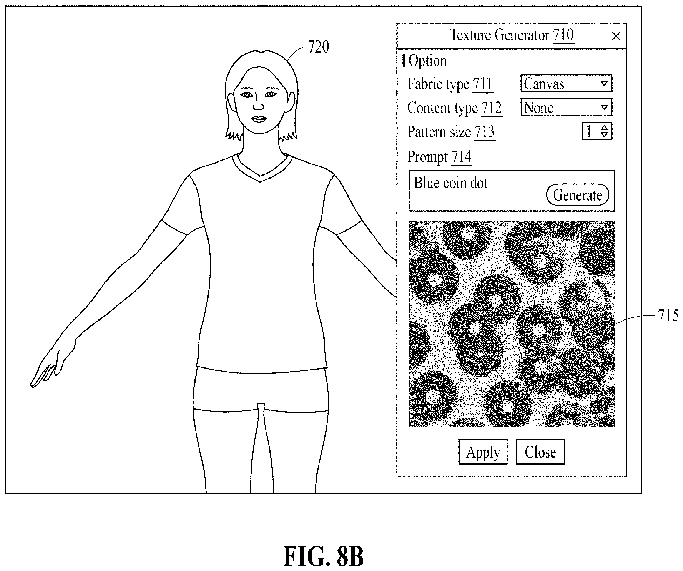

Referring to FIG. 8B, when the user specifies the fabric type option 711 as "Canvas," inputs a text "Blue coin dot" into the prompt 714, and clicks a "Generate" button, the electronic device 900 may receive such user inputs from the first texture generator interface 710 and generate a composite texture map corresponding to "Blue coin dot on Canvas" in the composite texture map region 715.

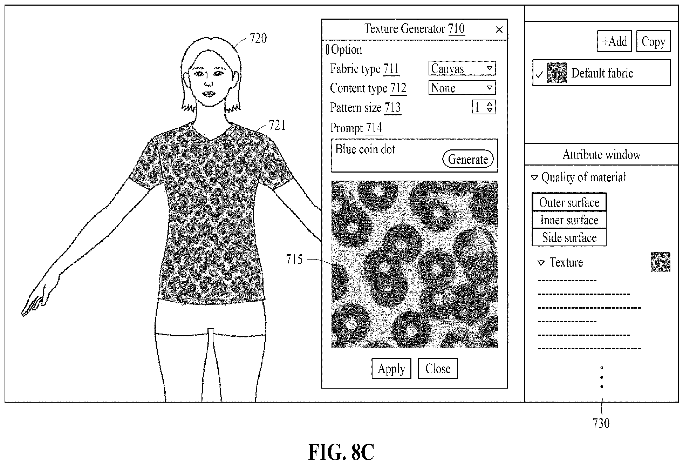

Referring to FIG. 8C, when the user clicks on an "Apply" button on the first texture generator interface 710, the electronic device 900 may receive such a user input and simulate, onto the avatar 720, a virtual garment 721 applied with the composite texture map. In this case, the user may modify attributes of the composite texture map through an attribute window interface 730.

Referring to FIG. 8D, the second texture generator interface 810 may be implemented as an interactive chat-type interface. The user may type, into the second texture generator interface 810, a text 811 to generate a texture map of a canvas material on which "blue coin dots" are represented. Alternatively, the user may not input a designation (or a name) "Canvas," but may instead input a text "gritty, rough texture."

Upon receiving this user input, the electronic device 900 may output a composite texture map 814 without any intermediate steps, but may first display a normal map 812 of the canvas based on user settings or commands. In this case, the electronic device 900 may output a feedback message to the user (e.g., inquiring about whether a desired target fabric type is correct, or guiding the user to select one by outputting preset candidates) to allow the user to adjust input data in real time. Upon receiving an input 813 confirming the normal map of the canvas from the user, the electronic device 900 may display a composite texture map 814 corresponding to "blue coin dots on the canvas" on the second texture generator interface 810.

However, even in this case, if the user desires another composite texture map because the pattern is not what the user desires, or if the user desires a composite texture map with more information added by additionally inputting other information (e.g., stretch, softness, or the like which is information related to a physical property of a fabric), the electronic device 900 may perform additional operations to generate a final composite texture map.

The electronic device 900 may receive a command or message 815 from the user to apply the composite texture map 814 to the virtual garment 721 of the avatar 720, and may simulate a virtual garment applied with the composite texture map 814. The electronic device 900 may also display an attribute window interface 730 for the applied composite texture map 814, in a similar way shown in FIGS. 8A through 8C, to allow the user to modify attributes (or properties) of the composite texture map 814.

Although embodiments described above with reference to FIGS. 8A through 8D are shown as the 3D virtual garment 721 being worn by the avatar 720, embodiments are not limited to such scenarios, and composite texture maps may be displayed as two-dimensional (2D) pattern pieces.

FIG. 9 is a block diagram illustrating an electronic device according to an embodiment. Referring to FIG. 9, according to an embodiment, the electronic device 900 may include a processor 930, a memory 950, and an output device 970 (e.g., a display). The processor 930, the memory 950, and the output device 970 may be connected to each other via a communication bus 905. As described above, for ease of description, the electronic device 900 may include the processor 930 for performing at least one of the methods described above or an algorithm corresponding to the at least one method.

The output device 970 may display a UI (e.g., the UI 700) that receives user inputs on statuses and operations related to texture map generation provided by the processor 930.

The memory 950 may store a texture map generation algorithm to be performed by the processor 930, and data obtained from sensors and a communication unit. In addition, the memory 950 may store various other information generated by the processing of the processor 930 described above. In addition, the memory 950 may store various data, programs, or the like. The memory 950 may include a volatile memory or a non-volatile memory. The memory 950 may include a mass storage medium, such as a hard disk, to store various data.

Further, the processor 930 may perform at least one of the methods described above with reference to FIGS. 1 through 8D or an algorithm corresponding to the at least one method. The processor 930 may be a hardware-implemented data processing device having a physically structured circuit to execute desired operations. The desired operations may include, for example, code or instructions included in a program. The processor 930 may include, for example, a central processing unit (CPU), a graphics processing unit (GPU), or a neural network processing unit (NPU). The electronic device 900, which is a hardware-implemented electronic device, may include, for example, a microprocessor, a CPU, a processor core, multicore processor, a multiprocessor, an application-specific integrated circuit (ASIC), or a field-programmable gate array (FPGA).

The processor 930 may execute the program and control the electronic device 900. The code of the program executed by the processor 930 may be stored in the memory 950.

The processor 930 may receive input data related to a target fabric from the user, classify the input data into mapping data for generating texture maps corresponding to information of the target fabric, generate at least one of a normal map or a diffuse map by inputting the mapping data into an ANN model, and generate a composite texture map corresponding to the target fabric based on the normal map or the diffuse map.

The learning (or training) processes and operating algorithms described above may be performed on a server including the electronic device 900 described herein, in communication with a user terminal, to be simulated through a UI (e.g., the UI 700) displayed on the user terminal.

For example, the server may run a service platform that provides a simulation of a virtual garment, and the user may use the service platform to access and use a service that generates a composite texture map. Accordingly, the user may transmit input data using a UI of the service platform through the user terminal, and the server may transmit a result of simulating the composite texture map generated according to a user input received through the electronic device 900 described above through the service platform to allow the user terminal to display the virtual garment.

Alternatively, the user terminal may be the electronic device 900 that performs the operating algorithms and methods described above.

The embodiments described herein may be implemented using hardware components, software components and/or combinations thereof. A processing device may be implemented using one or more general-purpose or special purpose computers, such as, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such as, parallel processors.

The software may include a computer program, a piece of code, an instruction, or some combination thereof, to independently or collectively instruct or configure the processing device to operate as desired. Software and/or data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described examples may be recorded in non-transitory computer-readable media including program instructions to implement various operations of the above-described examples. The media may also include, alone or in combination with the program instructions, data files, data structures, and the like. The program instructions recorded on the media may be those specially designed and constructed for the purposes of examples, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, and memory sticks), and the like. Examples of program instructions include both machine code, such as produced by a compiler, and files containing higher-level code that may be executed by the computer using an interpreter.

The above-described hardware devices may be configured to act as one or more software modules in order to perform the operations of the above-described examples, or vice versa.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims and their equivalents, and all variations within the scope of the claims and their equivalents are to be construed as being included in the disclosure.

## Claims

1. A method of generating a texture map, comprising:

   receiving input data related to a target fabric from a user;
   classifying the input data into mapping data for generating texture maps corresponding to information of the target fabric;
   generating at least one of a normal map or a diffuse map by feeding the mapping data into an artificial neural network (ANN) model; and
   generating a composite texture map corresponding to the target fabric based on the normal map or the diffuse map.

2. The method of claim 1, wherein the receiving of the input data comprises:
   in response to receiving text data input from the user, detecting information of the target fabric based on the text data.

3. The method of claim 1, wherein the receiving of the input data comprises:
   in response to receiving image data input from the user, detecting information of the target fabric included in the image data.

4. The method of claim 1, wherein the classifying of the input data into the mapping data comprises:

   classifying the information of the target fabric into normal map information, diffuse map information, or other information,
wherein the normal map information comprises information related to a fabric type, and the diffuse map information comprises information related to a fabric pattern representation.

5. The method of claim 1, wherein the ANN model comprises:
a generative ANN model configured to generate the texture maps as seamless maps.

6. The method of claim 1, wherein the ANN model comprises:
a machine learning model configured to generate a preset by learning a correlation between a fabric type and the normal map.

7. The method of claim 6, wherein the classifying of the input data into the mapping data comprises:
in response to the preset matching the input data, generating the mapping data based on the preset.

8. The method of claim 6, wherein the classifying of the input data into the mapping data comprises:
in response to the preset not matching the input data, outputting mapping data related to the target fabric based on the input data.

9. The method of claim 8, wherein the outputting of the mapping data related to the target fabric comprises:
in response to the mapping data not matching the preset and the mapping data being normal map information, outputting a candidate group of presets similar to the normal map information.

10. The method of claim 1, wherein the generating of the texture maps comprises:

processing the normal map into a filter image and deforming the diffuse map using the filter image; and
blending the deformed diffuse map and the filter image.

11. The method of claim 10, wherein the blending comprises:
blending the filter image and the deformed diffuse map through image compositing.

12. The method of claim 1, further comprising:

generating another map by feeding the mapping data, into the ANN model,
wherein the generating of the composite texture map comprises:

generating a final composite texture map corresponding to the target fabric based on at least one of the normal map, the diffuse map, or the other map,
wherein the other map is generated based on normal map information and other information.

13. The method of claim 1, further comprising:
simulating the composite texture map onto a three-dimensional (3D) virtual garment, and displaying the 3D virtual garment to which the composite texture map is applied through a user interface (UI).

14. The method of claim 1, further comprising:
outputting a feedback message to the user such that the user adjusts the input data in real time.

15. An electronic device configured to simulate a virtual garment, comprising:

one or more processors; and
memory storing instructions, the instructions when executed by the one or more processors cause the one or more processors to:

receive input data related to a target fabric from a user;
classify the input data into mapping data for generating texture maps corresponding to information of the target fabric;
generate at least one of a normal map or a diffuse map by feeding the mapping data into an artificial neural network (ANN) model; and
generate a composite texture map corresponding to the target fabric based on the normal map or the diffuse

map.

Start

110

Receive input data related to target fabric from user

120

Classify input data into mapping data for generating texture maps corresponding to information of target fabric

130

Generate at least one of normal map or diffuse map of target fabric by inputting mapping data into ANN model

140

Generate texture map corresponding to target fabric based on normal map or diffuse map

End

# FIG. 1

From 130

```
                                                    ┌─ 140
┌─────────────────────────────────────────────────────┐
│                                              ┌─ 141  │
│   ┌──────────────────────────────────────────────┐   │
│   │     Adjust size of normal map or diffuse map  │   │
│   └──────────────────────────────────────────────┘   │
│                                              ┌─ 142  │
│   ┌──────────────────────────────────────────────┐   │
│   │   Process normal map into filter image, and deform │
│   │        diffuse map using filter image         │   │
│   └──────────────────────────────────────────────┘   │
│                                              ┌─ 143  │
│   ┌──────────────────────────────────────────────┐   │
│   │   Blend deformed diffuse map and filter image │   │
│   └──────────────────────────────────────────────┘   │
└─────────────────────────────────────────────────────┘
```

End

# FIG. 2

**FIG. 3**

400

410

Blue coin dot, Canvas

420

ANN model

431

432

440

Compositing algorithm

450

460

# FIG. 4

<u>500</u>

**FIG. 5**

601

610

Canvas 611

Corduroy 612

French terry 613

Encoder 621

Latent vector 622

Decoder 623

640

602

'French terry'

Type one hot encoding 631

MLP 632

Latent vector 633

Decoder 634

French terry 613

FIG. 6

From 140

150

Simulate composite texture map onto 3D virtual garment,
and display 3D virtual garment to which composite
texture map is applied through UI

End

# FIG. 7

700

701

720

Texture Generator 710          ×

▌Option

Fabric type 711          Canvas          ▽

Content type 712          None          ▽

Pattern size 713          1 ⬍

Prompt 714

Blue coin dot          ( Generate )

715

Apply          Close

**FIG. 8A**

FIG. 8B

**FIG. 8C**

700

720

810

Texture Generator

811

Generate canvas with
"blue coin dot" thereon

812

Normal map of canvas

813

Confirm

814

815

Apply

721

FIG. 8D

900

```
                            ┌─ 905

        ┌─ 930              │
    ┌──────────────┐        │
    │   Processor  │◄──────►│
    └──────────────┘        │
                            │        ┌─ 970
                            │    ┌──────────────────┐
                            │◄──►│  Output device   │
                            │    └──────────────────┘
        ┌─ 950              │
    ┌──────────────┐        │
    │    Memory    │◄──────►│
    └──────────────┘        │
```

# FIG. 9

## INTERNATIONAL SEARCH REPORT

| International application No. |
| --- |
| **PCT/KR2024/010260** |

| A. | CLASSIFICATION OF SUBJECT MATTER |
| --- | --- |

**D06C 23/00**(2006.01)i; **D06C 27/00**(2006.01)i

According to International Patent Classification (IPC) or to both national classification and IPC

| B. | FIELDS SEARCHED |
| --- | --- |

Minimum documentation searched (classification system followed by classification symbols)

D06C 23/00(2006.01); G01B 11/24(2006.01); G06F 15/18(2006.01); G06F 17/30(2006.01); G06F 17/40(2006.01); G06F 9/44(2006.01); G06N 7/08(2006.01); G06T 1/00(2006.01); G06V 10/14(2022.01); G06V 10/764(2022.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 텍스처 (texture), 패브릭 (fabric), 인공 신경망 (artificial neural network), 매핑 (mapping)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2022-0128270 A (FRONTIER.COOL INC.) 20 September 2022 (2022-09-20)<br>See claim 11; and paragraphs [0015]-[0035]. | 1-3,13-15 |
| A | | 4-12 |
| A | KR 10-2007-0041806 A (HYUNDAI MOTOR COMPANY) 20 April 2007 (2007-04-20)<br>See claims 1 and 2; and paragraphs [0118]-[0123]. | 1-15 |
| A | KR 10-2008-0099099 A (KONKUK UNIVERSITY INDUSTRIAL COOPERATION CORP.) 12 November 2008 (2008-11-12)<br>See claims 1-8; and paragraphs [0028]-[0030]. | 1-15 |
| A | KR 10-2002-0083071 A (LEE, Jun Hwan et al.) 01 November 2002 (2002-11-01)<br>See abstract; and claims 1 and 2. | 1-15 |

☑ Further documents are listed in the continuation of Box C.  ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **25 October 2024** | **27 October 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
|---|---|
| | **PCT/KR2024/010260** |

### C.     DOCUMENTS CONSIDERED TO BE RELEVANT

| Category* | Citation of document, with indication, where appropriate, of the relevant passages | Relevant to claim No. |
|---|---|---|
| A | KR 10-2009-0012649 A (FXCODE CO., LTD.) 04 February 2009 (2009-02-04)<br>     See claim 1. | 1-15 |

Form PCT/ISA/210 (second sheet) (July 2022)

**INTERNATIONAL SEARCH REPORT**
Information on patent family members

International application No.

**PCT/KR2024/010260**

| Patent document cited in search report | | | Publication date (day/month/year) | Patent family member(s) | | | Publication date (day/month/year) |
|---|---|---|---|---|---|---|---|
| KR | 10-2022-0128270 | A | 20 September 2022 | CN | 115130367 | A | 30 September 2022 |
| | | | | US | 2022-0292810 | A1 | 15 September 2022 |
| KR | 10-2007-0041806 | A | 20 April 2007 | US | 2007-0085826 | A1 | 19 April 2007 |
| | | | | US | 7747548 | B2 | 29 June 2010 |
| KR | 10-2008-0099099 | A | 12 November 2008 | KR | 10-0907760 | B1 | 15 July 2009 |
| KR | 10-2002-0083071 | A | 01 November 2002 | | None | | |
| KR | 10-2009-0012649 | A | 04 February 2009 | | None | | |

Form PCT/ISA/210 (patent family annex) (July 2022)